# EUROPEAN PATENT APPLICATION

(11) **EP 4 600 209 A1**
(43) Date of publication of application: **13.08.2025**
(21) Application number: 23874846.1
(22) Date of filing: 03.10.2023
(51) Int. Cl.: C01B 32/16

(54) **APPARATUS FOR RECOVERING CARBON NANOTUBES, APPARATUS FOR PRODUCING CARBON NANOTUBES, AND METHOD FOR RECOVERING CARBON NANOTUBES**

(30) Priority: 07.10.2022 JP 2022162771
(71) Applicant: Dowa Thermotech Co., Ltd., Chiyoda-ku Tokyo 101-0021 (JP); Meijo Nano Carbon Co., Ltd., Nagoya-shi, Aichi 463-0003 (JP); Osaka Soda Co., Ltd., Osaka-shi Osaka 550-0011 (JP)
(72) Inventor: FUJITA, Takahiro, Tokyo 101-0021 (JP); HASHIMOTO, Takeshi, Nagoya-shi, Aichi 463-0003 (JP); TAKANO, Kei, Nagoya-shi, Aichi 463-0003 (JP); KAGAWA, Hisato, Osaka-shi, Osaka 550-0011 (JP)
(74) Representative: Müller-Boré & Partner Patentanwälte PartG mbB
(86) International application number: PCT/JP2023/036036
(87) International publication number: WO 2024/075719

(57) **Abstract**

A carbon nanotube collection apparatus for collecting a carbon nanotube, the carbon nanotube collection apparatus includes a collection room which collects the carbon nanotube, wherein the collection room includes: a housing; and a storage container provided under the housing, wherein: the housing includes: a first opening part communicating with a carbon nanotube production apparatus; an opening/closing mechanism which opens and closes the first opening part; and a second opening part communicating with the storage container; and the storage container is attached to be attachable to and detachable from the housing.

## Description

### TECHNICAL FIELD

The present invention relates to a carbon nanotube collection apparatus for collecting a carbon nanotube, a carbon nanotube manufacturing apparatus having the carbon nanotube collection apparatus, and a carbon nanotube collection method.

### BACKGROUND ART

The carbon nanotube has excellent characteristics such as electrical conductivity, thermal conductivity, mechanical strength, and so on, and is thus a new material attracting attention in many fields. As a carbon nanotube manufacturing apparatus, there is known a manufacturing apparatus using the chemical vapor deposition method (namely, the CVD method) of producing the carbon nanotube by thermally decomposing a raw material containing carbon (carbon source) disclosed in Patent Document 1.

Besides, Patent Document 2 discloses the provision of a carbon nanotube collection apparatus in or near a collection part of a reaction furnace for producing the carbon nanotube by the CVD method. The collection apparatus disclosed in Patent Document 2 rolls a winding member for winding the carbon nanotube to wind the carbon nanotube into a roll shape and form a wound body, and takes the wound body out from a takeout port provided in the collection part to collect the carbon nanotube.

### PRIOR ART DOCUMENT

### PATENT DOCUMENT

Patent Document 1: Japanese Laid-open Patent Publication No. 2019-064918
Patent Document 2: Japanese Laid-open Patent Publication No. 2004-190166

### SUMMARY OF THE INVENTION

### PROBLEMS TO BE SOLVED BY THE INVENTION

In the carbon nanotube collection apparatus disclosed in Patent Document 2, the wound body is taken out of the collection part at the stage that the wound body of the carbon nanotube reaches a predetermined diameter. Therefore, every time one wound body of the carbon nanotube is manufactured, it is necessary to stop the carbon nanotube production apparatus, and to lower temperatures of the reaction furnace and the collection part to an ordinary temperature so as to collect the manufactured wound body. Further, in resuming the production of the carbon nanotube, it is necessary to raise a temperature of an atmosphere in the reaction furnace to a temperature suitable for the production of the carbon nanotube.

In other words, every time the carbon nanotube is collected, the carbon nanotube collection apparatus disclosed in Patent Document 2 is required for the temperature of the reaction furnace to be lowered and raised again, which makes a time during which the carbon nanotube fails to be produced in the reaction furnace longer. Therefore, in the case of massively manufacturing the carbon nanotube, a long time has been required until the manufacture of a desired amount of carbon nanotubes is completed.

The present invention has been made in consideration of the above circumstances, and has an object to provide a carbon nanotube collection apparatus, a carbon nanotube manufacturing apparatus, and a carbon nanotube manufacturing method capable of shortening a time to manufacture a desired amount of carbon nanotubes in massively manufacturing carbon nanotubes.

### MEANS FOR SOLVING THE PROBLEMS

In order to solve the above problem, the present inventors have found that carbon nanotubes can be collected without lowering a temperature of a production apparatus by blocking an atmosphere between the production apparatus and a collection apparatus of the carbon nanotubes, and come to complete the present invention.

An aspect of the present invention for solving the above problem is exemplified below.
[1] A carbon nanotube collection apparatus for collecting a carbon nanotube produced by a carbon nanotube production apparatus, the carbon nanotube collection apparatus including
   a collection room which collects the carbon nanotube, wherein
   the collection room includes:
      a housing; and
      a storage container provided under the housing, wherein:
         the housing includes:
         a first opening part communicating with the carbon nanotube production apparatus;
         an opening/closing mechanism which opens and closes the first opening part; and
         a second opening part communicating with the storage container; and
         the storage container is attached to be attachable to and detachable from the housing.
[2] The carbon nanotube collection apparatus according to [1], wherein
   the collection room includes:
   a gas supply port to which a gas is supplied; and
   an exhaust port from which the gas supplied into the collection room is exhausted.
[3] The carbon nanotube collection apparatus according to [2], wherein:
   the gas supply port is provided in the housing; and
   the exhaust port is located on a side lower than the gas supply port.
[4] The carbon nanotube collection apparatus according to [3], wherein the exhaust port is provided in the storage container.
[5] The carbon nanotube collection apparatus according to [4], further including:
   an exhaust line communicating with the exhaust port; and
   an oxygen concentration meter provided in the exhaust line.
[6] The carbon nanotube collection apparatus according to any one of [2] to [5], further including
   a gas supply mechanism which switches between an incombustible gas and air to supply either gas to the collection room.
[7] The carbon nanotube collection apparatus according to any one of [1] to [6], wherein
   a collection basket in a mesh shape which is installed to be attachable to and detachable from the storage container is provided inside the storage container.
[8] The carbon nanotube collection apparatus according to any one of [1] to [7], further including
   a compression mechanism which compresses the carbon nanotube stored in the storage container.
[9] A carbon nanotube manufacturing apparatus including:
   a production apparatus which produces a carbon nanotube; and
   the carbon nanotube collection apparatus according to any one of [1] to [8].
[10] A carbon nanotube collection method using a carbon nanotube collection apparatus, the carbon nanotube collection apparatus including
   a collection room which collects the carbon nanotube, wherein
   the collection room includes:
      a housing; and
      a storage container provided under the housing, the carbon nanotube collection method including:
         a storage step of passing a carbon nanotube produced by a carbon nanotube production apparatus through an opening part provided in the housing and communicating with the carbon nanotube production apparatus to store the carbon nanotube in the storage container; and
         a collection step of detaching the storage container from the housing and collecting the carbon nanotube in the storage container with the opening part closed.
[11] The carbon nanotube collection method according to [10], wherein
   in the collection step, an atmosphere in the collection room is replaced with an incombustible gas before detaching the storage container from the housing.
[12] The carbon nanotube collection method according to [11], wherein
   the atmosphere in the collection room is replaced with air after replacing the atmosphere in the collection room with the incombustible gas.
[13] The carbon nanotube collection method according to [12], wherein
   in the collection step, an oxygen concentration in a gas exhausted from the collection room is measured, and the storage container is detached from the housing based on the measured oxygen concentration.
[14] The carbon nanotube collection method according to any one of [11] to [13], wherein
   exhaust is performed on a side lower than a supply port of a gas supplied into the collection room.
[15] The carbon nanotube collection method according to any one of [10] to [14], wherein:
   the gas supplied into the collection room is supplied to the housing; and
   the exhaust is performed from the storage container.
[16] The carbon nanotube collection method according to any one of [10] to [15], wherein:
   in the storage step, the carbon nanotube is stored in a collection basket in a mesh shape which is installed inside the storage container; and
   in the collection step, the collection basket in which the carbon nanotube is stored is changed with another collection basket after detaching the storage container from the housing.
[17] The carbon nanotube collection method according to any one of [10] to [16], wherein
   in the storage step, the carbon nanotube stored in the storage container is compressed.

### EFFECT OF THE INVENTION

According to the present invention, it is possible to provide a carbon nanotube collection apparatus, a carbon nanotube manufacturing apparatus, and a carbon nanotube manufacturing method capable of shortening a time to manufacture a desired amount of carbon nanotubes in massively manufacturing carbon nanotubes.

### BRIEF DESCRIPTION OF THE DRAWINGS

FIG. 1 is an explanatory view illustrating a schematic configuration of a carbon nanotube manufacturing apparatus according to a first embodiment.
FIG. 2 is a view for explaining a winding structure of a carbon nanotube.
FIG. 3 is a view illustrating a state where a winding member has moved to a pull-out position.
FIG. 4 is a view for explaining a collection basket in a mesh shape.
FIG. 5 is a view for explaining a carbon nanotube collection method.
FIG. 6 is an explanatory view illustrating a schematic configuration of a carbon nanotube manufacturing apparatus according to a second embodiment.
FIG. 7 is a view for explaining a carbon nanotube collection method.
FIG. 8 is a view for explaining a compression mechanism of carbon nanotubes.
FIG. 9 is a view illustrating a configuration example of a carbon nanotube manufacturing apparatus in which a reaction furnace is installed on a side surface portion of a winding room.

### EMBODIMENTS FOR CARRYING OUT INVENTION

Hereinafter, embodiments of the present invention will be explained with reference to the drawings. Note that in this description and the drawings, the same codes are given to elements having substantially the same functional configurations to omit duplicate explanations.

### (First Embodiment)

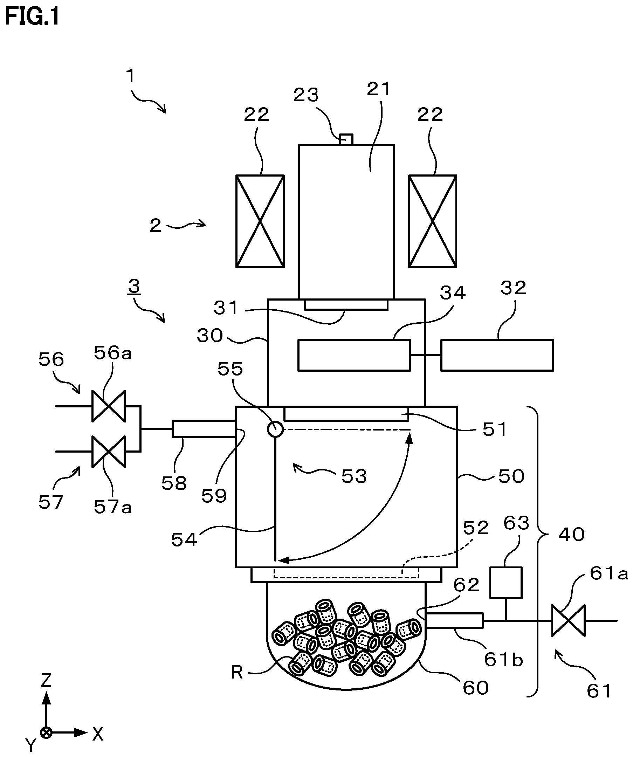

FIG. 1 is an explanatory view illustrating a schematic configuration of a CNT manufacturing apparatus 1 which manufactures a carbon nanotube (hereinafter, referred to as "CNT") according to a first embodiment. Note that the CNT in this description is a tubular carbon allotrope (typically, a cylindrical structure with a graphite structure), and includes a so-called single-walled CNT, multi-walled CNT, or carbon nanohorn having a horn-shaped tube tip.

As illustrated in FIG. 1, the CNT manufacturing apparatus 1 has a production apparatus 2 which produces CNTs, and a collection apparatus 3 which is provided at a lower end portion of the CNT production apparatus 2 and collects the CNTs. Note that an "X-direction" in the drawings is a depth direction of the collection apparatus 3, a "Y-direction" is a width direction of the collection apparatus 3, and a "Z-direction" is a height direction of the collection apparatus 3. The directions X to Z are perpendicular to one another.

### <Carbon nanotube production apparatus>

An apparatus configuration of the production apparatus 2 is not particularly limited as long as it can produce a CNT. Thus, as the production apparatus 2, the apparatus using the chemical vapor deposition method (namely, the CVD method) of thermally decomposing a source gas containing carbon to produce CNTs as in Patent Document 1 or Patent Document 2 is applicable, for example.

The production apparatus 2 exemplified in FIG. 1 has a reaction furnace 21, a heater 22 which is provided on a lateral side of the reaction furnace 21, and a raw material supply port 23 for supplying a raw material for the CNT production to the reaction furnace 21.

The shape of the reaction furnace 21 is not limited, but is preferably, for example, a straight pipe shape (namely, a shape with a linearly extending axis). Further, the cross-sectional shape of the reaction furnace 21 may be a rounded shape such as a circular shape, an elliptical shape, an egg shape, or an oval shape, or a polygonal shape.

The shape and the heating method of the heater 22 are not particularly limited as long as they can heat the reaction furnace 21 to a temperature suitable for the production of the CNT. The heater 22 only needs to be able to heat the reaction furnace 21, for example, to 500°C to 2000°C, and preferably to 1000°C to 1600°C. As a concrete example of the heater 22, there is a tungsten heater capable of heating the reaction furnace 21 to 500°C to 2000°C or a silicon carbide heater (SiC heater) capable of heating the reaction furnace 21 to 600 to 1600°C.

A carrier gas such as, for example, a hydrogen gas is also supplied to the raw material supply port 23 together with gas being a carbon source and a raw material such as a catalytic metal or a catalytic metal compound.

### <Carbon nanotube collection apparatus>

The collection apparatus 3 includes a winding room 30 for winding the CNT produced by the production apparatus 2 and a collection room 40 for collecting a CNT wound body R formed in the winding room 30.

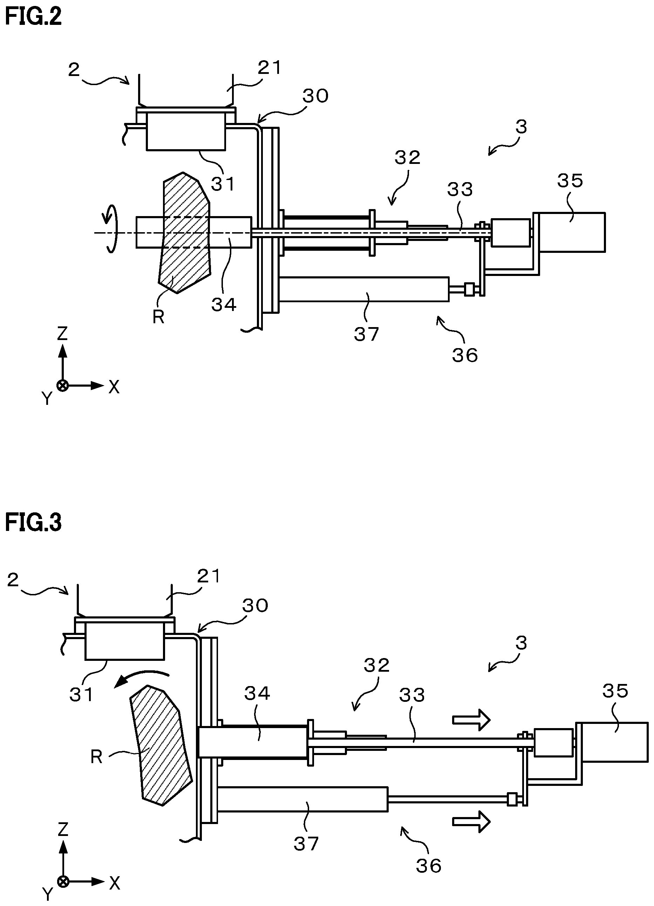

First, the winding room 30 and its peripheral structure will be explained with reference to FIG. 2.

An opening part 31 communicating with a lower end of the reaction furnace 21 of the production apparatus 2 is provided in a ceiling surface portion of the winding room 30. The CNTs produced in the reaction furnace 21 are transported together with the carrier gas into the winding room 30 through the opening part 31.

The winding mechanism 32 for winding the CNTs is provided at a side surface portion of the winding room 30. The winding mechanism 32 has a rotary body 33, a winding member 34, and a driving part 35.

The rotary body 33 is, for example, a columnar or cylindrical member, and is arranged such that the rotation axis direction is oriented in the horizontal direction (the X direction in this embodiment). The rotary body 33 is provided in a manner to penetrate the side surface portion of the winding room 30, and a part of the rotary body 33 projects into the winding room 30.

The winding member 34 is a member which extends in the axial direction of the rotary body 33, and is constituted of, for example, a columnar or cylindrical roller. A base end of the winding member 34 is attached to a tip of the rotary body 33 (an end portion on the winding room 30 side). Note that the installation position of the winding member 34 is not particularly limited, but the winding member 34 only needs to be installed at a position where it can come into contact with the CNTs passed through the opening part 31.

The driving part 35 is provided outside the winding room 30. As the driving part 35, for example, a motor or the like is used. The rotary body 33 to which the winding member 34 is attached is connected to the driving part 35, so that when the rotary body 33 is rotated by the driving part 35, the winding member 34 also rotates integrally with the rotary body 33. The rotation speed of the rotary body 33 is appropriately set according to the production speed of the CNTs and the size of a desired CNT wound body R, and is set to, for example, 0.01 to 500 rpm.

A separation mechanism 36 which separates the CNT wound body R formed around the winding member 34 is also provided outside the winding room 30. The separation mechanism 36 is a mechanism which moves the above rotary body 33, winding member 34, and driving part 35 in a direction from the inside toward the outside of the winding room 30. In other words, the separation mechanism 36 is a mechanism which moves the winding member 34 in a direction of pulling it out of the winding room 30, and the rotary body 33 and the winding member 34 can be moved from a tip end side toward the base end side of the winding member 34 by the separation mechanism 36.

In this embodiment, as one example of the separation mechanism 36, a cylinder mechanism 37 is provided outside the winding room 30. The winding member 34 moves between a position where the CNTs are wound (winding position) illustrated in FIG. 2 and a position where the CNT wound body R is separated from the winding member 34 (pull-out position) illustrated in FIG. 3 by an expanding and contracting operation of the cylinder mechanism 37. In short, the winding member 34 can move in a direction of coming close to or separating from the side surface portion of the winding room 30.

In the collection apparatus 3 having the above separation mechanism 36, the winding member 34 located at the winding position forms the CNT wound body R, and then the winding member 34 is retracted to the pull-out position to bring the CNT wound body R into contact with an inner surface of the side surface portion of the winding room 30. Then, in this state, the winding member 34 is further retracted to bring an inner peripheral surface of the CNT wound body R into a state where its inner peripheral surface is not supported any longer by the winding member 34. This causes the CNT wound body R to fall off the winding member 34 to separate the CNT wound body R and the winding member 34. Thereafter, the winding member 34 moves forward from the pull-out position to the winding position and starts to wind the CNT for forming a next CNT wound body R.

Note that for the CNT manufacturing apparatus 1, providing the winding structure of the CNT is not essential. In a case of providing no winding structure, the CNT manufacturing apparatus 1 is constituted by coupling the later-described collection room 40 to the lower end portion of the production apparatus 2, for example.

Next, the collection room 40 and its peripheral structure will be explained while referring to FIG. 1 again.

As illustrated in FIG. 1, the collection room 40 has a housing 50 and a storage container 60 provided under the housing 50.

A first opening part 51 communicating with the winding room 30 is provided in a ceiling surface portion of the housing 50, and a second opening part 52 communicating with the storage container 60 is provided in a bottom surface portion of the housing 50.

The first opening part 51 has a shape capable of passing the CNT wound body R formed in the winding room 30 therethrough. As previously described, the winding room 30 communicates with the reaction furnace 21 of the production apparatus 2 via the opening part 31, and thus the first opening part 51 of the housing 50 communicating with the winding room 30 can be rephrased as an opening part communicating with the production apparatus 2.

The second opening part 52 has a shape capable of passing the CNT wound body R formed in the winding room 30 therethrough, as the first opening part 51 has.

Inside the housing 50, a partition valve 53 is provided as an opening/closing mechanism which opens and closes the first opening part 51. The partition valve 53 allows switching between an open state and a closed state of the first opening part 51. The open state of the first opening part 51 is a state where the CNT can pass from the winding room 30 into the housing 50, and the closed state of the first opening part 51 is a state where an atmosphere in the winding room 30 and an atmosphere in the housing 50 are blocked between each other.

The partition valve 53 includes a valve element 54 in a plate shape and a pivot shaft part 55 which pivots the valve element 54. The pivot shaft part 55 is provided near a peripheral edge of the first opening part 51, and fixed such that the pivot shaft is oriented to the horizontal direction (the Y direction in this embodiment). The valve element 54 can turn clockwise or counterclockwise centered on the pivot shaft within a range of a predetermined angle by connecting one end of the valve element 54 to the pivot shaft part 55.

The valve element 54 has a shape capable of covering the first opening part 51, and a not-illustrated sealing member is provided on a surface, on a side facing the first opening part 51, of the valve element 54. Therefore, when the valve element 54 turns to be in a horizontal state, the presence of the sealing member causes the atmosphere in the winding room 30 and the atmosphere in the housing 50 to be blocked between each other.

Further, the configuration of the opening/closing mechanism of the first opening part 51 is not limited to the above configuration as long as the opening and closing of the first opening part 51 can be switched. For example, the opening/closing mechanism in FIG. 1 has the configuration in which the partition valve 53 is provided in the housing 50, and the valve element 54 is turned upward from the lower side to close the first opening part 51, but a configuration in which a partition valve (not illustrated) is provided in the winding room 30, and a valve element (not illustrated) of the partition valve is turned downward from the upper side to close the first opening part 51 may be applied. Alternatively, a door (not illustrated) slidable in the horizontal direction may be provided right over or right under the first opening part 51 to close the first opening part 51 in place of the partition valve 53.

However, the CNT discharged from the reaction furnace 21 sometimes falls without being wound by the winding member 34, and, for example, the CNT may also adhere to a bottom surface in the winding room 30. In this case, it is also considered that the structure in which the partition valve is provided in the winding room 30 and the valve element is turned downward from the upper side causes the CNT to be sandwiched between the valve element and the first opening part 51, and affects a sealing property. If the sealing property deteriorates, the maintenance work for removing the CNT adhered to a gap between the valve element and the first opening part 51 is necessary. Such a problem is likely to arise as also in the case of providing a door slidable in the horizontal direction as the opening/closing mechanism of the first opening part 51.

Consequently, from the viewpoint of reducing a maintenance frequency in addition to enhancing the sealing property, as illustrated in FIG. 1, the opening/closing mechanism of the first opening part 51 preferably has the structure in which the partition valve 53 is provided in the housing 50 and the valve element 54 is turned upward from the lower side.

A supply line 56 of an incombustible gas and a supply line 57 of air are provided outside the housing 50. The supply lines 56, 57 are provided with valves 56a, 57a respectively. The supply lines 56, 57 are connected to a gas supply pipe 58, and the incombustible gas or air is supplied to the gas supply pipe 58 by switching between opening and closing of the above valves 56a, 57a. The kind of incombustible gas is not particularly limited, but a nitrogen gas is preferably used.

A gas supply port 59 to which the gas supply pipe 58 is connected is formed in a side surface portion of the housing 50. The incombustible gas or air is supplied via the gas supply port 59 into the housing 50.

Note that in the above gas supply mechanism capable of switching between the supply and a stop of the incombustible gas and switching between the supply and a stop of air, the switching between the gases may be performed by worker's manual operation, or may be automatically performed by a control unit (not illustrated) for controlling the operation of the gas supply mechanism.

Further, although the illustration is omitted, a support member such as a base or columnar legs for supporting their own weight of the production apparatus 2, the winding room 30, the housing 50, and the like is appropriately provided on the bottom surface portion of the housing 50. This holds a posture of the CNT manufacturing apparatus 1 even when the storage container 60 is detached from the housing 50.

Next, the storage container 60 which the collection room 40 includes will be explained.

The storage container 60 is a container in which a part of an upper surface is open, and can house a plurality of CNT wound bodies R. In the storage container 60, the CNT wound bodies R passed through the first opening part 51 and the second opening part 52 of the housing 50 and fallen therein are temporarily stored.

Further, the storage container 60 is attached to be attachable to and detachable from the housing 50. A fixing method of the storage container 60 and the housing 50 is not particularly limited as long as a worker can detach the storage container 60 from the housing 50, and, for example, a fixing method using a fixing clamp, or the like is applied.

A non-illustrated sealing member is provided between the upper surface portion of the storage container 60 and the bottom surface portion of the housing 50. With the storage container 60 attached to the housing 50, the provision of the sealing member prevents the atmosphere in the collection room 40 from flowing out from a gap between the housing 50 and the storage container 60 to the outside.

An exhaust line 61 which exhausts the atmosphere in the collection room 40 is provided outside the storage container 60. The exhaust line 61 has a valve 61a and an exhaust pipe 61b, and the exhaust pipe 61b is connected to an exhaust port 62 formed in a side surface portion of the storage container 60. The gas supplied into the housing 50 is exhausted via the exhaust port 62. Using a collection basket 64 in a mesh shape to be described later for the gas to be exhausted from the exhaust port 62 of the storage container 60 allows the collection of the CNT fallen without being wound by the winding member 34, and enables environmentally friendly operation of increasing cleanliness of the exhaust gas.

Note that the exhaust port 62 may be provided in not the storage container 60 but, for example, the housing 50. In this case, in order to increase the cleanliness of the gas to be exhausted from the exhaust port of the housing 50 and enable the environmentally friendly operation, it is preferable to provide a mesh-shaped filter member (not illustrated) at the exhaust port of the housing 50 and collect the CNT fallen without being wound by the winding member 34.

However, the exhaust port 62 is preferably located on a side lower than the gas supply port 59. As described later, when the storage container 60 is detached from the housing 50, a process of replacing the atmosphere in the collection room 40 from the carrier gas to the incombustible gas is included, and in a case where a specific gravity of the carrier gas is lighter than a specific gravity of the incombustible gas, the carrier gas easily stays in an upper side in the housing 50.

On the other hand, when the exhaust port 62 is located on the side lower than the gas supply port 59, the incombustible gas flows downward from the upper side in the housing 50, thus facilitating the exhaust of the carrier gas by using the incombustible gas, and making it easy to replace the carrier gas atmosphere in the collection room 40 with the incombustible gas atmosphere. Further, as illustrated in FIG. 1, when the exhaust port 62 is provided in the storage container 60, the atmosphere replacement in the storage container 60 becomes easy.

An oxygen concentration meter 63 which measures an oxygen concentration in the exhaust gas is preferably provided in the exhaust line 61. Using the oxygen concentration meter 63 makes it easy to predict what kinds of gases compose the atmosphere in the collection room 40, so that the detachment of the storage container 60 and reopening of the partition valve 53 which are described later can be each performed at proper timing. This enables the elimination of an extra waiting time likely to occur during a process from the collection of the CNTs to the resumption of the production.

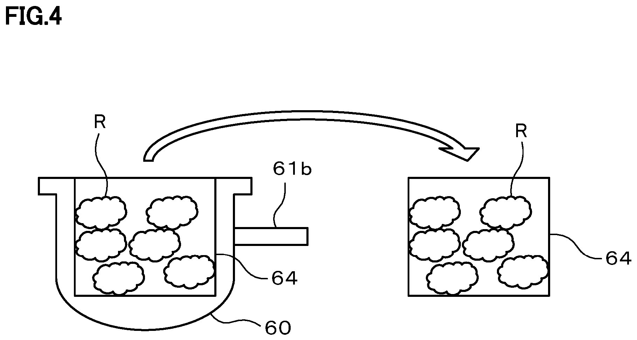

As illustrated in FIG. 4, the collection basket 64 capable of storing the CNT wound bodies R is preferably installed inside the storage container 60. The collection basket 64 is a mesh-shaped basket in which a plurality of opening portions are formed, and is attachable to and detachable from the storage container 60. A material of the collection basket 64 is not particularly limited as long as it has heat resistance to heat which the CNT wound bodies R fallen to the storage container 60 have, and, for example, metal material is used.

In a case of providing the collection basket 64, when the storage container 60 is detached from the housing 50, the CNT wound bodies R can be easily collected by taking the collection basket 64 in which the CNT wound bodies R are stored out of the storage container 60. Further, another collection basket with the interior empty can be installed in the storage container 60 out of which the collection basket 64 has been taken, so that a time to attach the storage container 60 to the housing 50 again can be shortened.

Note that the collection basket 64 is formed in a mesh shape, thereby allowing the gas supplied into the housing 50 to pass through meshes of the collection basket 64, so that exhaust from the exhaust port 62 is not inhibited. In addition, a part of the CNTs sometimes falls without being wound by the winding member 34 (FIG. 1), but such a CNT is collected by the collection basket 64, and thus mixing of the CNT into the exhaust line 61 can be suppressed. That is, the collection basket 64 in a mesh shape increases the cleanliness of the exhaust gas, and enables the environmentally friendly operation.

The CNT manufacturing apparatus 1 according to this embodiment is configured as above. Note that materials of members constituting the CNT manufacturing apparatus 1 are not particularly limited as long as they do not inhibit expression of the operation and effect explained in this description, and, for example, stainless steel or rolled steel for general structure (SS material) is employed. Further, members of the members constituting the CNT manufacturing apparatus 1 with which the CNTs may come into contact may be subjected to a Teflon (registered trademark) coating thereon.

### (Carbon nanotube collection method)

Next, one example of the CNT collection method using the collection apparatus 3 will be explained. Note that of the operations of the supply or the stop of the gases, the opening and closing of the partition valve 53, and the like to be explained below, the operation able to be automatically performed may be automatically performed through the control unit (not illustrated), or may be performed by the worker's manual operation.

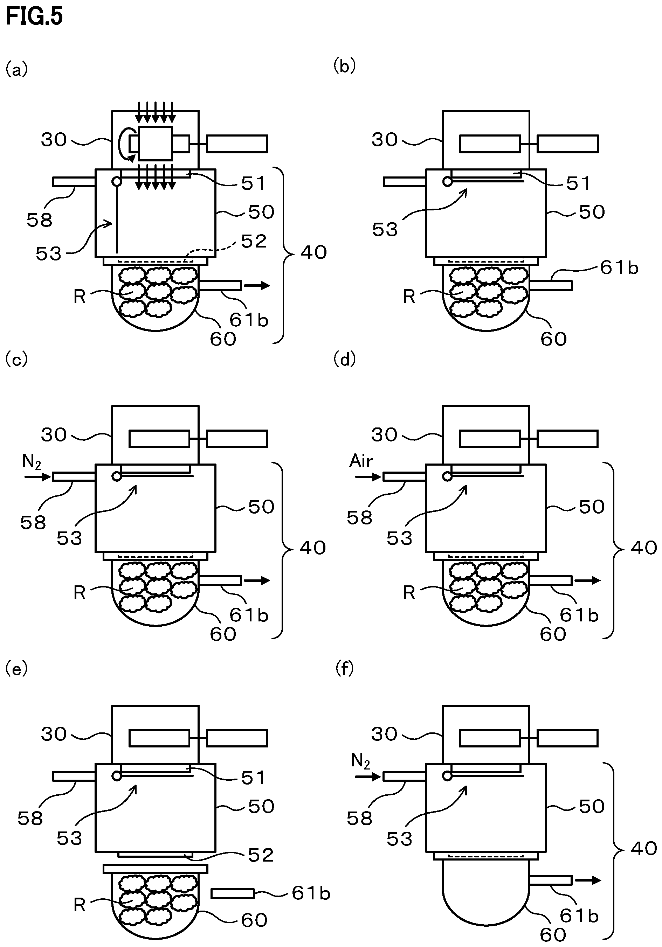

First, as illustrated in FIG. 5(a), in a storage step of storing CNTs in the storage container 60, the partition valve 53 in the housing 50 is opened, and the first opening part 51 is in an open state. In this step, the gas supply from the gas supply pipe 58 is stopped, and the exhaust from the exhaust pipe 61b is performed, so that the atmosphere in the collection room 40 is the carrier gas atmosphere supplied to the reaction furnace 21 of the production apparatus 2 (FIG. 1).

At this moment, the formation of the CNT wound body R by winding the CNT (FIG. 2) and the separation of the CNT wound body R (FIG. 3) are performed in the winding room 30. The CNT wound body R separated here passes through the first opening part 51 and the second opening part 52 from the winding room 30, and falls to the storage container 60. The CNT wound bodies R are stored in the storage container 60 by repeating such winding and separation of the CNTs.

Next, as illustrated in FIG. 5(b), at the stage where the storage step of the CNTs has been performed for a predetermined time, or a predetermined amount of the CNTs has been stored in the storage container 60, the supply of the carrier gas and the exhaust from the exhaust pipe 61b are stopped to stop the production of the CNTs. Thereafter, the partition valve 53 is closed to close the first opening part 51. This causes the atmosphere in the winding room 30 and the atmosphere in the housing 50 to be blocked between each other. At this moment, the heaters 22 (FIG. 1) of the production apparatus 2 are not stopped, and a temperature of the atmosphere in the reaction furnace 21 and the winding room 30 is held at the temperature suitable for the production of the CNT.

Next, as illustrated in FIG. 5(c), the incombustible gas such as, for example, a nitrogen gas is supplied from the gas supply pipe 58 and the exhaust from the exhaust pipe 61b is resumed to replace the atmosphere in the collection room 40 with the incombustible gas. A hydrogen gas which is a combustible gas is contained in the carrier gas, and thus the atmosphere in the collection room 40 is preferably replaced with the incombustible gas in this manner.

Next, as illustrated in FIG. 5(d), the gas supplied from the gas supply pipe 58 is switched from the incombustible gas to air to replace the atmosphere in the collection room 40 with air. At this time, in a case where the oxygen concentration meter 63 (FIG. 1) is installed, for example, when an oxygen concentration in the exhaust gas becomes a predetermined value or more, the atmosphere in the collection room 40 can be judged as being replaced with air.

Note that temperatures of the above incombustible gas and air which are supplied to the collection room 40 only need to be an ordinary temperature (for example, 20 to 25°C).

Next, as illustrated in FIG. 5(e), after replacing the atmosphere in the collection room 40 with air, the supply of air from the gas supply pipe 58 and the exhaust from the exhaust pipe 61b are stopped, and the exhaust pipe 61b is detached from the storage container 60. Thereafter, the storage container 60 is detached from the housing 50 to collect the CNT wound bodies R in the storage container 60 detached therefrom.

In this step, an outflow of the atmosphere in the housing 50 from the lower side of the housing 50 and an inflow of outside air into the housing 50 occur, but the atmosphere in the housing 50 and the atmosphere in the winding room 30 are blocked between each other by the partition valve 53. This prevents an inflow of the atmosphere from the housing 50 to the winding room 30 side from occurring, and the atmosphere in the winding room 30 is held at the temperature suitable for the production of the CNTs.

Next, as illustrated in FIG. 5(f), after collecting the CNT wound bodies R in the storage container 60, the storage container 60 is attached to the housing 50 again. The storage container 60 attached to the housing 50 here is, for example, another storage container in an empty state different from the storage container 60 detached in FIG. 5(e), or the storage container in which another collection basket in an empty state changed with the collection basket 64 illustrated in FIG. 4 is installed.

After attaching the storage container 60 to the housing 50, the exhaust pipe 61b is attached to the storage container 60, and the supply of the incombustible gas from the gas supply pipe 58 and the exhaust from the exhaust pipe 61b are resumed to replace the atmosphere in the collection room 40 with the incombustible gas atmosphere. At this time, in a case where the oxygen concentration meter 63 (FIG. 1) is installed, for example, when an oxygen concentration in the exhaust gas becomes a predetermined value or less, the atmosphere in the collection room 40 can be judged as being replaced with the incombustible gas.

Then, after replacing the atmosphere in the collection room 40 with the incombustible gas atmosphere, the partition valve 53 is opened to resume the supply of the raw material for CNT production and the carrier gas to the reaction furnace 21 of the production apparatus 2 (FIG. 1). As previously described, the atmosphere in the reaction furnace 21 and the winding room 30 is held at the temperature suitable for the production of the CNT at this stage. Further, while the storage container 60 is detached from the housing 50, the first opening part 51 is closed, which prevents outside air from flowing into the atmosphere in the reaction furnace 21 and the winding room 30.

In other words, the atmosphere in the reaction furnace 21 and the winding room 30 is in a state suitable for the production of the CNT, so that the production of the CNT is resumed at the timing when the raw material for CNT production and the carrier gas are supplied.

Thereafter, the steps of winding and storing the CNTs and the collection step illustrated in FIG. 5(a) to FIG. 5(f) are repeated. Note that the step of replacing the atmosphere in the housing 50 with air illustrated in FIG. 5(d) may be eliminated. In this case, the storage container 60 is detached from the housing 50 with the incombustible gas atmosphere left in the collection room 40, and after leaving the housing 50 and the storage container 60 as it is until the incombustible gas in the housing 50 and the storage container 60 is replaced with outside air, a worker collects the CNTs.

In the CNT collection method according to this embodiment explained above, the storage container 60 in which the CNT wound bodies R are stored can be detached from the housing 50 with the atmosphere blocked between the winding room 30 and the housing 50. This allows the atmosphere in the reaction furnace 21 of the production apparatus 2 to be held in the state suitable for the production of the CNTs during the collection of the CNTs.

This enables the elimination of an atmosphere replacement step and a heating step for CNT production required conventionally after a completion of collection work of a CNT. As a result, it is possible to shorten a time from the completion of the collection work of the CNTs to the resumption of the production of the CNT, and shorten a time to complete the manufacture of a desired amount of the CNTs.

Moreover, when the storage container 60 is detached from the housing 50, preventing outside air at low temperatures from flowing into the reaction furnace 21 at high temperatures enables a longer operating life of the reaction furnace 21. The reason why this effect is obtained is as follows.

For example, in a case of forming the reaction furnace 21 of, for example, ceramic, when outside air flows into the reaction furnace 21 at high temperatures, the reaction furnace 21 is likely to be damaged due to a thermal shock caused by a temperature difference. Further, for example, in a case of forming the reaction furnace 21 of carbon, when outside air flows into the reaction furnace 21 at high temperatures, the carbon of the reaction furnace 21 is likely to be rapidly oxidized to burn out.

On the other hand, in the collection apparatus 3 according to this embodiment, the first opening part 51 of the housing 50 is closed in detaching the storage container 60. This prevents outside air at low temperatures from flowing into the reaction furnace 21 at high temperatures, so that the longer operating life of the reaction furnace 21 can be achieved without causing such problems as described above.

### (Second Embodiment)

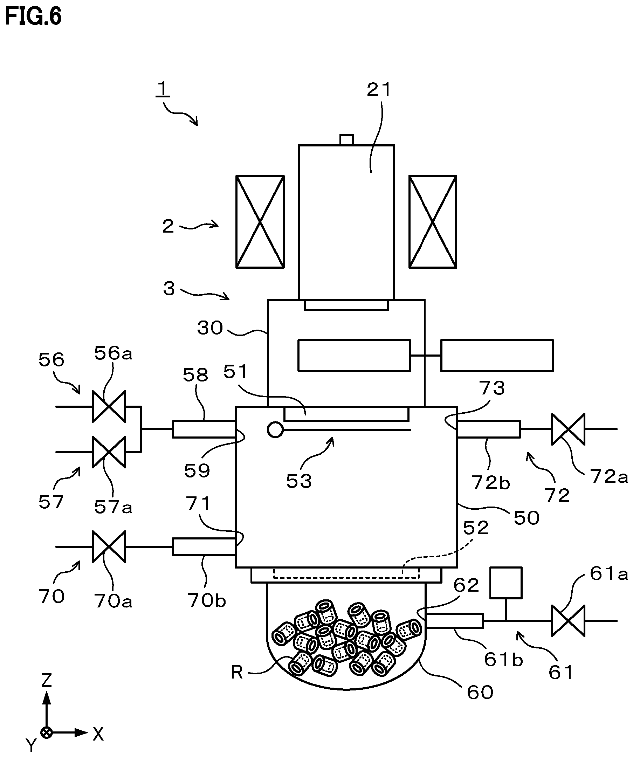

FIG. 6 is an explanatory view illustrating a schematic configuration of a CNT manufacturing apparatus 1 according to a second embodiment. The second embodiment is different from the first embodiment in that a second supply line 70 of an incombustible gas and a second exhaust line 72 are provided in addition to a first supply line 56 of the incombustible gas and a first exhaust line 61. Hereinafter, a collection apparatus 3 according to the second embodiment will be explained in more detail.

As illustrated in FIG. 6, the second supply line 70 of the incombustible gas has a valve 70a and a gas supply pipe 70b. The gas supply pipe 70b is connected to a gas supply port 71 formed in a side surface lower portion of a housing 50.

The second exhaust line 72 has a valve 72a and an exhaust pipe 72b. The exhaust pipe 72b is connected to an exhaust port 73 formed in a side surface portion facing the side surface portion of the housing 50 in which the gas supply port 71 is formed. The exhaust port 73 is formed at a position higher than the gas supply port 71.

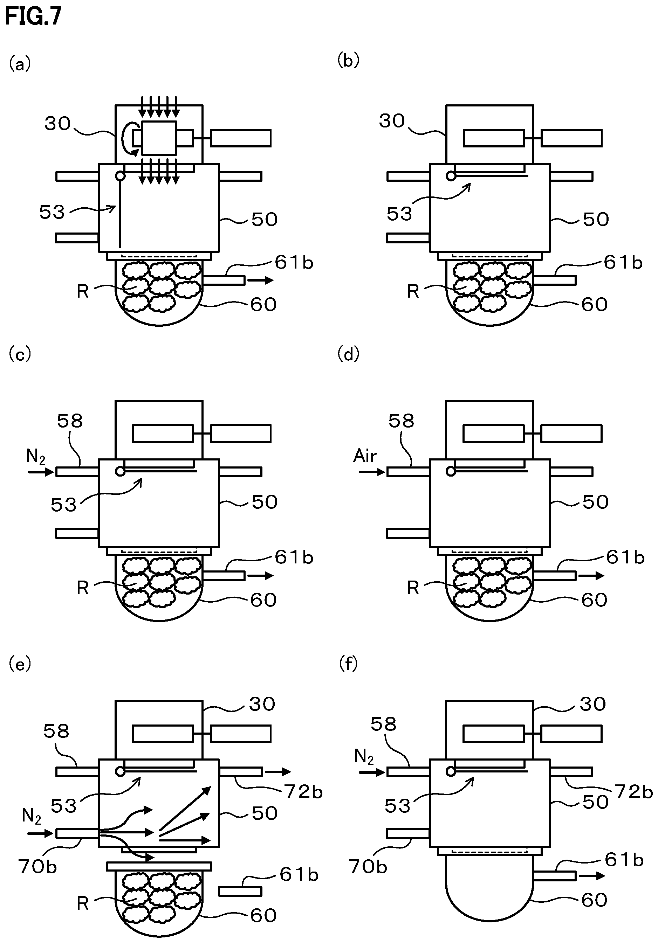

Next, one example of the CNT collection method in a case of using the collection apparatus 3 according to this embodiment will be explained with reference to FIGs. 7. Note that steps in FIG. 7(a) to FIG. 7(d) are the same as the steps in FIG. 5(a) to FIG. 5(d), and thus an explanation is omitted.

As illustrated in FIG. 7(e), in detaching a storage container 60, supply of air from a gas supply pipe 58 and exhaust from an exhaust pipe 61b are stopped, and supply of the incombustible gas from the gas supply pipe 70b and exhaust from the exhaust pipe 72b are started. In this state, the storage container 60 is detached from the housing 50 to collect CNT wound bodies R in the storage container 60.

In this step, when the storage container 60 is detached from the housing 50, the incombustible gas supplied from the gas supply pipe 70b flows mainly toward the exhaust pipe 72b to form an airflow upward from a lower side in the housing 50. Therefore, for example, even though a sealing defect occurs between a winding room 30 and the housing 50 due to a deterioration of a sealing member to thereby cause a gas in the winding room 30 to flow out to the housing 50 side, the flown-out gas can be exhausted from the exhaust pipe 72b.

After collecting the CNT wound bodies R in the storage container 60, the supply of the incombustible gas from the gas supply pipe 70b and the exhaust from the exhaust pipe 72b are stopped, and the storage container 60 is attached to the housing 50 again, as illustrated in FIG. 7(f). Thereafter, the supply of the incombustible gas from the gas supply pipe 58 and the exhaust from the exhaust pipe 61b are resumed.

As explained above, in the collection apparatus 3 according to the second embodiment, in detaching the storage container 60 from the housing 50, even though the gas in the winding room 30 flows out from a first opening part 51 due to the deterioration of the sealing member, or the like, the gas can be prevented from flowing out to the outside of the housing 50.

In terms of enhancing this effect, the gas supply port 71 communicating with the second supply line 70 of the incombustible gas illustrated in FIG. 6 is preferably formed on a side lower than the first opening part 51, and further preferably formed near the second opening part 52. This makes it easy for an ascending air current to be formed in the entire interior of the housing 50, and makes it difficult for the gas flown out from the interior of the winding room 30 into the housing 50 to flow out from a lower end of the housing 50.

Further, in terms of enhancing the above effect, the exhaust port 73 communicating with the second exhaust line 72 is preferably formed near the first opening part 51. This makes it easy for the gas to be exhausted from the exhaust port 73 without flowing toward the lower side of the housing 50 even though the gas flows out from the winding room 30 into the housing 50.

The CNT collection apparatuses 3 according to the first to second embodiments have been explained above.

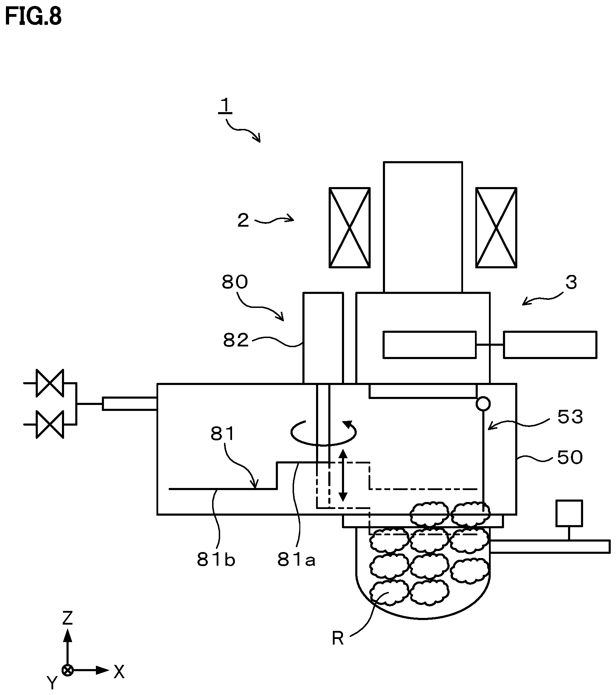

Note that as exemplified in FIG. 8, the collection apparatus 3 may be provided with a compression mechanism 80 for compressing CNTs. The compression mechanism 80 has a pressing plate 81 as a pressing member and a driving part 82 connected to the pressing plate 81.

The pressing plate 81, whose shape of a cross section cut along a vertical direction is a shape having a step, has an upper step part 81a and a lower step part 81b. The lower step part 81b has an outer shape smaller than inside dimensions of the storage container 60 (inside dimensions of the collection basket 64 when the collection basket 64 is installed). The driving part 82 is constituted by combining, for example, a motor, a cylinder, and the like, and the pressing plate 81 can be raised or turned by the driving part 82.

In the compression mechanism 80 having the above configuration, the pressing plate 81 is turnable between a position where the lower step part 81b of the pressing plate 81 is present under the first opening part 51 (position indicated with a two-dot chain line in FIG. 8) and a position where it is not present thereunder. In other words, the pressing plate 81 is turnable between a position for compressing the CNT wound bodies R in the storage container 60 (compression position) and a position where a fall of the CNT wound body R is not inhibited (retreat position).

Further, the pressing plate 81 has the outer shape smaller than the inside dimensions of the storage container 60, so that when the upper step part 81a is lowered to the vicinity of a bottom surface in the housing 50, the lower step part 81b is lowered to the interior of the storage container 60.

When the CNTs are collected using the compression mechanism 80, the pressing plate 81 is basically stopped at the retreat position during the production and the winding of the CNTs. Then, for example, when a predetermined time elapses from a start of the production of the CNT, or when the CNT wound bodies R fallen into the storage container 60 overflow an upper end of the storage container 60, the pressing plate 81 at the retreat position is turned to the compression position.

Then, the pressing plate 81 is lowered to compress the CNT wound bodies R stored in the storage container 60 with the lower step part 81b of the pressing plate 81. Thereafter, the pressing plate 81 is raised, and turned from the compression position to the retreat position.

Using the above compression mechanism 80 allows the compression of the CNT wound bodies R stored in the storage container 60 during the production of the CNTs. This expands a housing space of the CNT wound bodies R in the storage container 60 to allow the production of the CNTs to continue. This allows not only an increase in a collection amount of the CNTs every time CNTs are collected but also a reduction in a frequency of the CNT collection step, so that a manufacturing time of the CNTs can be secured for a longer time.

In particular, the CNTs are light in weight, and thus they are not broken by their own weight, and in terms of the nature of a CNT, a CNT wound body R is less likely to roll on a surface of other CNT wound bodies R, and the CNTs stored in the storage container 60 are likely to be bulky. Therefore, it is useful to provide the compression mechanism 80.

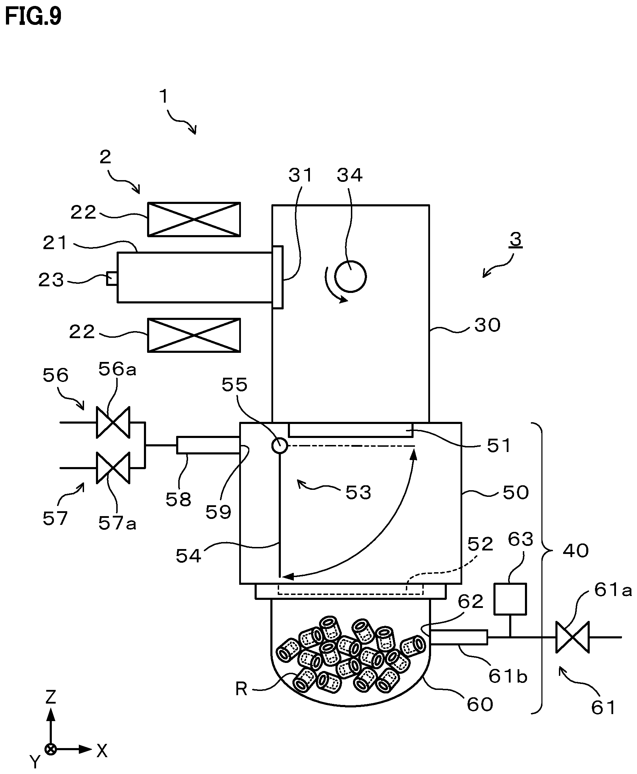

Note that in the CNT manufacturing apparatus 1 explained above, the production apparatus 2 is arranged over the collection apparatus 3, but may be arranged on a lateral side of the collection apparatus 3. For example, as illustrated in FIG. 9, the reaction furnace 21 of the production apparatus 2 may be attached to a side surface portion of the winding room 30 of the collection apparatus 3.

The winding member 34 in an example illustrated in FIG. 9 is arranged such that the rotation axis is in the Y direction, and the CNT discharged from the opening part 31 communicating with the reaction furnace 21 is wound by the winding member 34 in rotation. The CNT wound body R wound to be formed falls by the winding member 34 being pulled out to the deep side of a paper plane of FIG. 9 with the same separation mechanism as the separation mechanism 36 illustrated in FIG. 3. Thus, the CNT wound body R falls from the winding room 30 to the housing 50, and the CNT wound body R is stored in the storage container 60. The CNT manufacturing apparatus 1 constituted in this manner can also conduct the CNT collection method explained in, for example, FIGs. 5 or FIGs. 7.

Embodiments of the present invention have been explained above, but the present invention is not limited to the embodiments. It should be understood that various changes and modifications are readily apparent to those skilled in the art within the scope of the technical spirit as set forth in claims, and those should also be covered by the technical scope of the present invention.

For example, configuration requirements of the above embodiments can be arbitrarily combined. The operations and effects about the configuration requirements relating to the combination can be obtained as a matter of course from the arbitrary combination, and those skilled in the art can obtain clear other operations and effects from the description herein.

The effects described herein are merely explanatory or illustrative in all respects and not restrictive. The technique relating to this disclosure can offer clear other effects to those skilled in the art from the description herein in addition to or in place of the above effects.

### INDUSTRIAL APPLICABILITY

The present invention is applicable to a collection apparatus and a manufacturing apparatus of a carbon nanotube.

### EXPLANATION OF CODES

1 CNT manufacturing apparatus (carbon nanotube manufacturing apparatus)
2 CNT production apparatus (carbon nanotube production apparatus)
3 CNT collection apparatus (carbon nanotube collection apparatus)
21 reaction furnace
22 heater
23 raw material supply port
30 winding room
31 opening part
32 winding mechanism
33 rotary body
34 winding member
35 driving part
36 separation mechanism
37 cylinder mechanism
40 collection room
50 housing
51 first opening part
52 second opening part
53 partition valve
54 valve element
55 pivot shaft part
56 incombustible gas supply line
56a valve
57 air supply line
57a valve
58 gas supply pipe
59 gas supply port
60 storage container
61 exhaust line
61a valve
61b exhaust pipe
62 exhaust port
63 oxygen concentration meter
64 collection basket
70 incombustible gas supply line
70a valve
70b gas supply pipe
71 gas supply port
72 exhaust line
72a valve
72b exhaust pipe
73 exhaust port
80 compression mechanism
81 pressing plate
82 driving part
R CNT wound body (carbon nanotube wound body)

## Claims

1. A carbon nanotube collection apparatus for collecting a carbon nanotube produced by a carbon nanotube production apparatus, the carbon nanotube collection apparatus comprising
a collection room which collects the carbon nanotube, wherein
the collection room comprises:
a housing; and
a storage container provided under the housing, wherein:
the housing comprises:
a first opening part communicating with the carbon nanotube production apparatus;
an opening/closing mechanism which opens and closes the first opening part; and
a second opening part communicating with the storage container; and
the storage container is attached to be attachable to and detachable from the housing.

2. The carbon nanotube collection apparatus according to claim 1, wherein
the collection room comprises:
a gas supply port to which a gas is supplied; and
an exhaust port from which the gas supplied into the collection room is exhausted.

3. The carbon nanotube collection apparatus according to claim 2, wherein:
the gas supply port is provided in the housing; and
the exhaust port is located on a side lower than the gas supply port.

4. The carbon nanotube collection apparatus according to claim 3, wherein
the exhaust port is provided in the storage container.

5. The carbon nanotube collection apparatus according to claim 4, further comprising:
an exhaust line communicating with the exhaust port; and
an oxygen concentration meter provided in the exhaust line.

6. The carbon nanotube collection apparatus according to claim 2, further comprising
a gas supply mechanism which switches between an incombustible gas and air to supply either gas to the collection room.

7. The carbon nanotube collection apparatus according to claim 1, wherein
a collection basket in a mesh shape which is installed to be attachable to and detachable from the storage container is provided inside the storage container.

8. The carbon nanotube collection apparatus according to claim 1, further comprising
a compression mechanism which compresses the carbon nanotube stored in the storage container.

9. A carbon nanotube manufacturing apparatus comprising:
a production apparatus which produces a carbon nanotube; and
the carbon nanotube collection apparatus according to claim 1.

10. A carbon nanotube collection method using a carbon nanotube collection apparatus, the carbon nanotube collection apparatus comprising
a collection room which collects the carbon nanotube, wherein
the collection room comprises:
a housing; and
a storage container provided under the housing, the carbon nanotube collection method comprising:
a storage step of passing a carbon nanotube produced by a carbon nanotube production apparatus through an opening part provided in the housing and communicating with the carbon nanotube production apparatus to store the carbon nanotube in the storage container; and
a collection step of detaching the storage container from the housing and collecting the carbon nanotube in the storage container with the opening part closed.

11. The carbon nanotube collection method according to claim 10, wherein
in the collection step, an atmosphere in the collection room is replaced with an incombustible gas before detaching the storage container from the housing.

12. The carbon nanotube collection method according to claim 11, wherein
the atmosphere in the collection room is replaced with air after replacing the atmosphere in the collection room with the incombustible gas.

13. The carbon nanotube collection method according to claim 12, wherein
in the collection step, an oxygen concentration in a gas exhausted from the collection room is measured, and the storage container is detached from the housing based on the measured oxygen concentration.

14. The carbon nanotube collection method according to claim 11, wherein
exhaust is performed on a side lower than a supply port of a gas supplied into the collection room.

15. The carbon nanotube collection method according to claim 14, wherein:
the gas supplied into the collection room is supplied to the housing; and
the exhaust is performed from the storage container.

16. The carbon nanotube collection method according to claim 10, wherein:
in the storage step, the carbon nanotube is stored in a collection basket in a mesh shape which is installed inside the storage container; and
in the collection step, the collection basket in which the carbon nanotube is stored is changed with another collection basket after detaching the storage container from the housing.

17. The carbon nanotube collection method according to claim 10, wherein
in the storage step, the carbon nanotube stored in the storage container is compressed.
